# EUROPEAN PATENT APPLICATION

(11) **EP 2 464 129 A1**
(43) Date of publication of application: **13.06.2012**
(21) Application number: 10806240.7
(22) Date of filing: 05.08.2010
(51) Int. Cl.: H04N 13/04, H04N 5/93, H04N 7/173

(54) **VIDEO REPRODUCING DEVICE**

(30) Priority: 05.08.2009 JP 2009182151
(71) Applicant: Panasonic Corporation, Kadoma-shi Osaka 571-8501 (JP)
(72) Inventor: MATSUBARA, Akira, Osaka-shi, Osaka 540-6207 (JP)
(74) Representative: Ehlers, Jochen
(86) International application number: PCT/JP2010/004934
(87) International publication number: WO 2011/016240

(57) **Abstract**

A video reproducing device capable of synthesizing a first image being a stereo image and a second image and outputting a synthesized, including: an acquiring unit operable to acquire a first image and a second image to be synthesized in one frame; and a synthesizing unit operable to generate the synthesized image by synchronously synthesizing the first image and the second image acquired by the acquiring unit, and output the synthesized image, wherein, if the acquiring unit fails to acquire the second image to be synthesized in the one frame when the synthesizing unit generates the synthesized image, the synthesizing unit synthesizes a second image which is to be synthesized with a first image of a frame other than the one frame with the first image to be synthesized in the one frame.

## Description

### Technical Field

The technical field is related to a video reproducing device, more particularly to a video reproducing device capable of outputting a stereoscopic video signal.

### Background Art

Recently, the technical development of a video reproducing device capable of displaying a stereoscopic image (stereo image) has been advanced. When displaying a stereo image, the video reproducing device generates an image for the left eye and another image for the right eye from data of a content recorded in a video source such as an optical disc, and outputs them to a video display device. The video display device presents the image for the left eye and the image for the right eye alternately.

Patent literature 1 discloses a video reproducing device capable of displaying a stereo image, which provides a user with a right-eye image and a left-eye image having a parallax. The user recognizes a stereo image by synthesizing an image visually recognized through the right eye (right-eye image) and an image visually recognized through the left eye (left-eye image) in the brain.

Recently, in the content stored in BD-ROM (Blu-Ray Disc ROM) or other optical discs (video sources), varied video expressions are realized by synthesizing subtitles (captions) and/or active graphics for the main image and displayed. In particular, due to advancement in the graphics processing technology, graphics which are quite close to a moving picture can be realized by utilizing the animation techniques.

The subtitles and graphics images synthesized with the main image are generated in the video reproducing device based on the data of subtitles and/or graphics contained in the video source. In this case, the video reproducing device makes use of the memory and the processor, and generates the images of subtitles and/or graphics from the video source data so as to match the timing of synthesizing with the timing of the main image, and generates a video signal of a synthesized image by synthesizing the generated image with the image in each frame of the main image, and thereby outputs the synthesized video signal at the reproducing timing of the synthesized image.

If a load larger than expected is applied to the processor of the video reproducing device, generation of subtitle image and/or graphics image by the processor may not match with the timing of synthesis with the main image. In such circumstances, subtitle images and/or graphics images to be synthesized with the main image are to be missing temporarily at least for the right-eye image or the left-eye image.

For example, if the graphics image for the right eye (right-eye graphics image) is missing from the synthesized image temporarily, the user visually recognizes only the graphics image for the left eye on the graphics image, and the graphics image cannot be recognized as a stereoscopic image; additionally, the localization of the graphics image in the depth direction (depth-wise direction) cannot be determined correctly, and, accordingly, the user may recognize the image as defective (unnatural).

### Citation list

### Patent Literature

Patent Literature 1: JP2006-084964A

### Summary of Invention

### Technical Problem

As described, if any one of the left-eye image and the right-eye image of the stereo image to be synthesized with the main image is missing, even if temporarily, that is not a preferable matter.

A preferred embodiment is devised to solve the above problems, and is intended to provide a video reproducing device capable of displaying a natural stereo image which will not provide a feeling of strangeness to the user, even if a second image (for example, graphics or subtitles) to be synthesized with a first image (for example, a main image) is missing and cannot be used in synthesis.

### Solution to Problem

A first aspect provides a video reproducing device capable of synthesizing a first image being a stereo image and a second image and outputting a synthesized image. The video reproducing device includes: an acquiring unit operable to acquire a first image and a second image to be synthesized in one frame; and a synthesizing unit operable to generate the synthesized image by synchronously synthesizing the first image and the second image acquired by the acquiring unit, and output the synthesized image. If the acquiring unit fails to acquire the second image to be synthesized in the one frame when the synthesizing unit generates the synthesized image, the synthesizing unit synthesizes a second image which is to be synthesized with a first image of a frame other than the one frame with the first image to be synthesized in the one frame.

Another aspect provides a semiconductor device capable of synthesizing a first image being a stereo image and a second image and outputting a synthesized image. The semiconductor device includes: an acquiring unit operable to acquire a first image and a second image to be synthesized in one frame; a synthesizing unit operable to generate the synthesized image by synchronously synthesizing the first image and the second image acquired by the acquiring unit, and output the synthesized image; and a signal output unit operable to output the synthesized image. If the acquiring unit fails to acquire the second image to be synthesized in the one frame when the synthesizing unit generates the synthesized image, the synthesizing unit synthesizes a second image which is to be synthesized with a first image of a frame other than the one frame with the first image to be synthesized in the one frame.

Yet another aspect provides a video reproducing method for synthesizing a first image being a stereo image and a second image and outputting a synthesized image. The method includes: acquiring a first image and a second image to be synthesized in one frame by a acquiring unit; and generating the synthesized image by synchronously synthesizing the first image and the second image acquired by the acquiring, and outputting the synthesized image by a synthesizing unit. If the acquiring unit fails to acquire the second image to be synthesized in the one frame when the generating the synthesized image, the synthesizing unit synthesizes a second image which is to be synthesized with a first image of a frame other than the one frame with the first image to be synthesized in the one frame.

### Advantageous Effects of Invention

The video reproducing device of the preferred embodiment is capable of producing a natural stereo image which will not provide a feeling of strangeness to by the user, even if the second image (subtitles image, graphics image, etc.) of the stereo image to be synthesized in the first image (main image, etc.) is missing and cannot be utilized in synthesis.

### Brief Description of Drawings

Fig. 1 is an outline diagram of a 3D video reproducing and display system having a video reproducing device of a preferred embodiment.
Fig. 2 is an outline diagram of a video display device of the 3D video reproducing and display system.
Fig. 3 is an outline diagram of the video reproducing device of the preferred embodiment.
Fig. 4 is a detailed block diagram of a second AV processing unit of the video reproducing device of embodiment 1.
Fig. 5 is a diagram for explaining a plane synthesis model.
Fig. 6 is a schematic diagram of stereo video signals output by the video reproducing device of the preferred embodiment.
Fig. 7 is a diagram explaining the concept of depth in a stereo image.
Fig. 8 is a diagram explaining the offset to be applied to the image.
Fig. 9 is a detailed block diagram of a synthesizing unit of a second AV processing unit of the video reproducing device.
Fig. 10 is a flowchart of processing for outputting a graphics image.
Fig. 11A is a diagram explaining a substitute image output in the event of missing of a graphics image.
Fig. 11B is a diagram explaining a substitute image output in the event of missing of a graphics image.
Fig. 12 is a time-sequence diagram explaining the process executed by a graphics decoder and a synchronizing unit.
Fig. 13 is a time-sequence diagram explaining the process executed by the graphics decoder and the synchronizing unit.
Fig. 14 is a time-sequence diagram explaining the process executed by the graphics decoder and the synchronizing unit.
Fig. 15 is a detailed block diagram of the second AV processing unit of the video reproducing device of embodiment 2.
Fig. 16 is a detailed block diagram of the AV processing unit of the embodiments 1 and 2.
Fig. 17 is a detailed block diagram of a second AV processing unit of the video reproducing device of embodiment 3.
Fig. 18 is a diagram explaining estimation of depth.
Fig. 19 is a detailed block diagram of the AV processing unit of the embodiment 3.

### Description of Embodiments

Preferred embodiments are specifically described below.

In the following explanation of the preferred embodiments, "stereo image" (or "3D image") refers to an image which can be viewed stereoscopically by a user (viewer). An image signal including such stereo image is called a stereo image signal.

The video reproducing device according to the preferred embodiment explained below is a video reproducing device capable of outputting a stereo video signal. The stereo video signal is generated by the video reproducing device based on the data of a content (for example, a video stream signal) recorded in an optical disc (video source) such as BD-ROM.

This video reproducing device is capable of generating a main image (first image) and graphics image or subtitles image (second image) based on the data of a content recorded in a video source, synchronizing the second image with the first image to synthesize the both images, thereby generating a synthesized image, and outputting a video signal of the synthesized image (synthesized video signal) as a stereo video signal.

This video reproducing device, if generation of a second signal (subtitles image, graphics image, etc.) to be synthesized with a first image at a certain timing of synthesis fails to match with the timing of synthesis, outputs a second image to be used in another synthesis timing as the second image at the corresponding timing of synthesis. As a result, the video reproducing device prevents temporary missing of the second image in the synthesized image.

At this time, the video reproducing device properly adjusts the depth of the second image (corrects the depth). Hence, user's sense of strangeness about the stereo image due to temporary missing of the second image is alleviated.

### Preferred embodiment 1

### 1. Configuration of stereo image reproducing and display system

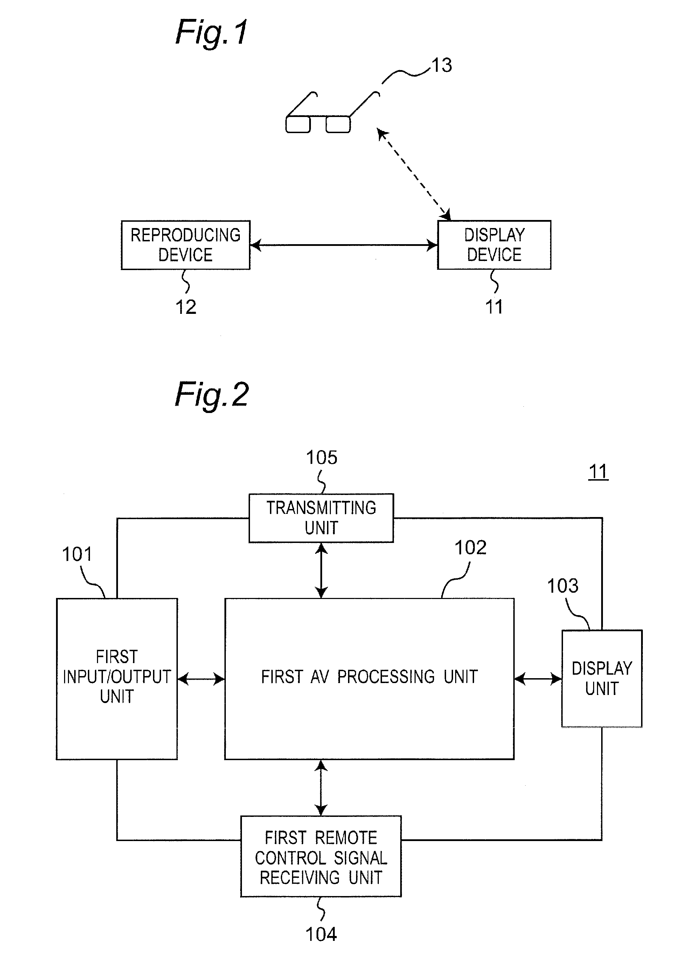

A stereo image reproducing and display system in preferred embodiment 1 is explained below. Fig. 1 is an overall structural diagram of a stereo image reproducing and display system having a video reproducing device 12 according to the embodiment 1. In Fig. 1, a video display device 11 is a display device for displaying a stereo image, or the like. The video reproducing device 12 is a device for receiving a data signal such as a image from a recording medium such as BD-ROM, optical disk or the like, or the Internet or other network, or broadcast wave (video source), and reproducing and outputting a stereo image signal. 3D glasses 13 are polarized glasses provided with a liquid crystal shutter for appropriately cutting off the stereo image to be displayed in the video display device 11.

Referring now to Fig. 2, the detail of the video display device 11 is described. Fig. 2 is a diagram showing the detail of the configuration of the video display device 11 in each preferred embodiment described in the present specification.

The video display device 11 includes a first input and output unit 101, a first AV processing unit 102, a display unit 103, a first remote-control signal receiving unit 104, a transmitting unit 105, and others, and receives a user's manipulation from the first remote-control signal receiving unit 104 and starts operation.

The stereo image signal output from the video reproducing device 12 is put into the first input and output unit 101. The first input and output unit 101 may be composed of a signal input unit corresponding to HDMI (high definition multimedia interface) Ver. 1.4 or the like. The stereo image signal is displayed on the display unit 103 after adjustment of resolution of the image in the first AV processing unit 102 and adjustment of timing with the voice.

In synchronism with the image displayed on the display unit 103, the transmitting unit 105 outputs a switching signal for controlling opening and closing of the shutters of the right and left lenses of the 3D glasses 13, which the user wears.

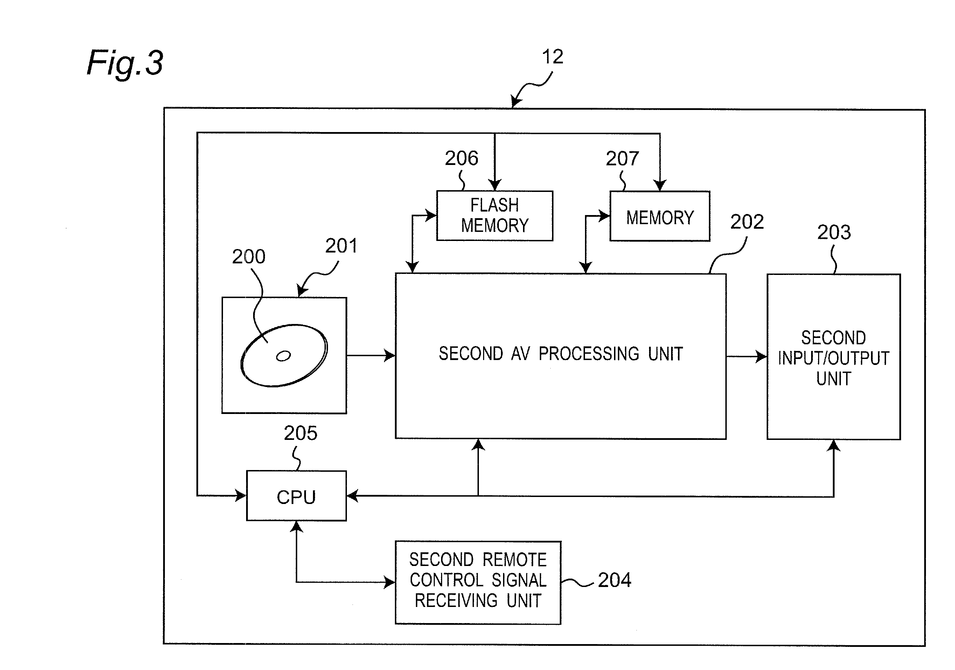

Fig. 3 is a diagram showing a configuration of the video reproducing device 12 of the embodiment. A disc drive unit 201 is a disc drive device in which a disc 200 such as BD-ROM is loaded, according to a command from a CPU 205, the data recorded in the disc 200 is output to a second AV processing unit 202. The second AV processing unit 202 receives a reproduction command from the user by way of a second remote-control signal receiving unit 204, acquires the data of a content recorded in the disc 200 from the disc drive 201, generates a stereo image signal, and outputs it to a second input/output unit 203.

The CPU 205 receives the user's command by way of the second remote-control signal receiving unit 204, and sends a command to the second AV processing unit 202 according to this command. The CPU 205 controls, as required, transfer data between the second AV processing unit 202 and a flash memory 206, or between the second AV processing unit 202 and a memory 207. The second remote-control signal receiving unit 204 receives the user's command output from a remote controller (not shown). The flash memory 206 stores software for operating the CPU 205 and the second AV processing unit 202, and further stores data necessary for synthesizing graphics information such as depth data (depth information) described below, with the main image. The memory 207 is a memory for temporarily storing data such as images when generating a stereo image signal by decoding data of the content.

The disc 200 stores various data, such as data of main image (first image) ("video data,"), data of graphics image (second video image) to be superimposed (synthesized) on the main image ("graphics data"), data of subtitles ("subtitles data"), menu to be presented to the user when the user manipulates the device and others. The second AV processing unit 202 decodes these pieces of data, develops into a plurality of images (planes), generates a synthesized image from these images, and outputs the video signal (synthesized video signal) from the second input/output unit 203.

The video reproducing device 12 may also have a recording medium such as a hard disk drive (HDD) in addition to the disc drive unit 201. The video reproducing device 12 may further have an antenna for receiving broadcast waves and a tuner or the like for converting the received broadcast waves into digital stream signals (video, audio, graphics, subtitles, etc.).

### 2. Operation of stereo image reproducing and display system

### 2.1 Overall operation

In the stereo image reproducing and display system having such configuration, the video reproducing device 12 reads out the data of the content recorded in the disc 200, generates a main image and a graphics image, synthesizes both images, and outputs a synthesized video signal showing a stereo image. The synthesized video signal is a video signal containing a left-eye image and a right-eye image.

The video display device 11 displays the left-eye image and the right-eye image contained in the entered synthesized video signal on the display by time division, and transmits the changeover timing of the time division at this time to the 3D glasses 13 in Fig. 1 as an infrared ray synchronizing signal (switching signal).

The 3D glasses 13 changes over the transmission rate of the liquid crystal shutter depending on the synchronizing signal received from the video display device 11, and alternately shuts off the viewing field of either the left eye side or the right eye side of the 3D glasses 13, thereby presenting the left-eye image only to the left eye, or the right-eye image only to the right eye. In this manner, a stereo image display is realized.

### 2.2 Graphics image synthesizing process

Next, the detail of the configuration of the second AV processing unit 202 is explained together with the synthesizing process of the main image and the graphics image in the second AV processing unit 202.

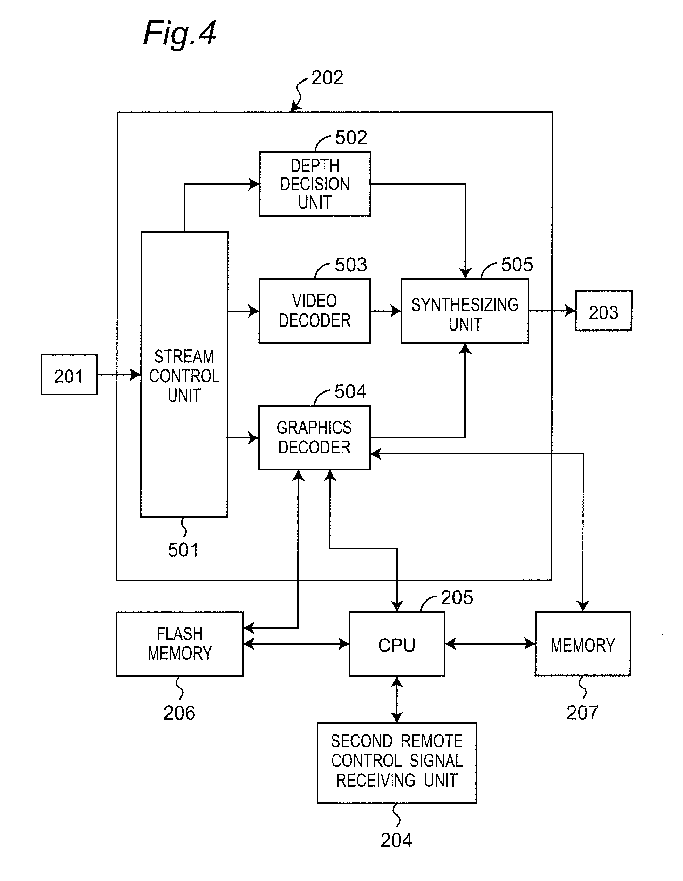

Fig. 4 is a block diagram showing the detail of the second AV processing unit 202 in the embodiment 1.

The second AV processing unit 202 includes a stream control unit 501, a depth decision unit 502, a video decoder 503, a graphics decoder 504, a synthesizing unit 505, and others. The second remote-control signal receiving unit 204 receives a command from the user by way of a remote controller (not shown). The CPU, according to this command, controls the second AV processing unit 202, the flash memory 206, the memory 207, and others.

The stream control unit 501 acquires the video data (data of main image), the graphics data (data of graphics image), and depth information collected in the disc 200 from the disc drive unit 201. The stream control unit 501 outputs the video data to the video decoder 503, the graphics data to the graphics decoder 504, and the depth information to the depth decision unit 502.

The video decoder 503 receives the video data from the stream control unit 501. The video data is compressed, and the compressed video data is expanded to generate video image (image of the main image only). The graphics decoder 504 receives the graphics data recorded in the disc 200 from the stream control unit 501, and expands the data to generate a graphics image (image of the graphics image only). Most of graphics data is composed of several parts such as images of buttons urging the user to manipulate or the like. The graphics decoder 504 decodes them, and depicts (writes) pictures on the memory 207 to generate a graphics image.

The graphics decoder 504 may also generates the graphics image by making use of the device's original graphics data recorded in the flash memory 206.

The disc 200 stores the left-eye images and the right-eye images each of the video data (data of main image) and the graphics data (data of graphics image). In the following explanation, the main image is described as a stereo image, but the main image may be also a non-stereo image. In such a case, too, the synthesized video signal can also be composed as a stereo image signal.

The information of depth-wise position (depth) of the video data and the graphics data is also recorded in the disc 200 as depth information. The information of depth position (depth information) may be recorded as the information of an average depth of an object in the image of video data and graphics data, and the depth information is recorded in the disc 200, aside from the video data and the graphics data.

The depth decision unit 502 calculates the depth of graphics data from the depth information recorded in the disc 200, and outputs to the synthesizing unit 505 as depth data. In the stereo image, by deviating the left-eye image and the right-eye image in the lateral direction on the display screen (adjusting the offset), the apparent distance of the image in the depth-wise direction can be shown farther from the display position (position on the display screen) or shown closer to the display position. The apparent depth position (depth) determined by the depth decision unit 502 is hereinafter called the depth data.

The synthesizing unit 505 synthesizes a plurality of planes of the main image, graphics image, and others, and generates synthesized video information. That is, the synthesizing unit 505 synthesizes the video image (main image) from the video decoder 503 and the graphics image from the graphics decoder 504 based on the depth data sent from the depth decision unit 502.

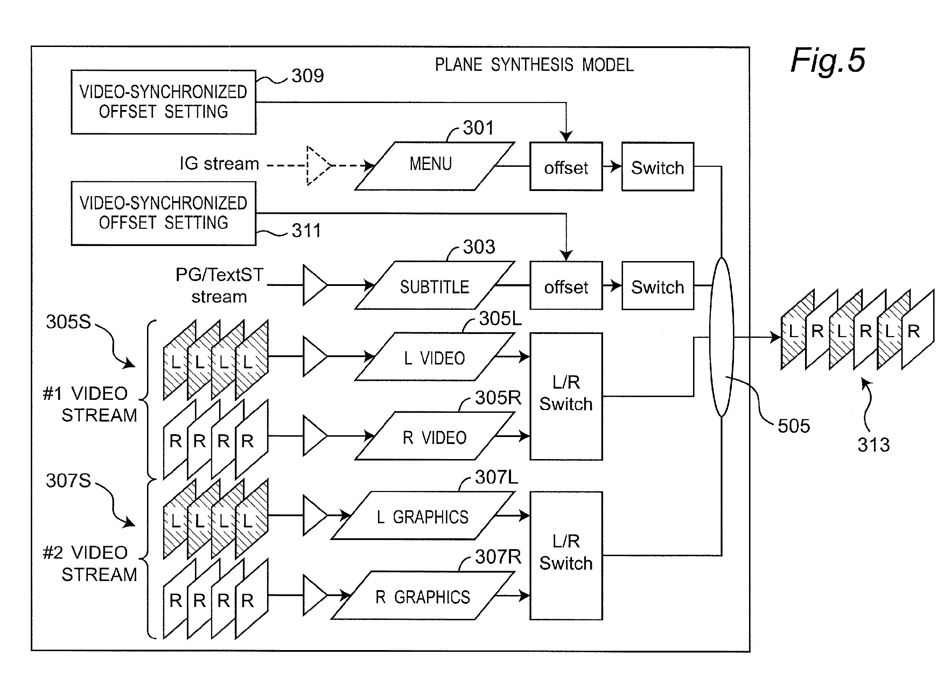

2.2.1 Plane synthesis model
Referring now to Fig. 5, the process from superimposing (synthesizing) a graphics image on a main image to outputting a synthesized image is explained. The model shown in Fig. 5 is generally known as a plane synthesis model.

In the video decoder 503, from the video data 305S (#1 VIDEO STREAM) being read out from the disc 200 or the like, the video image for left eye (L video image) 305L and the video image for right eye (R video image) 305R (the left-eye image and the right-eye image of the main image) are generated, and output to the synthesizing unit 505. At the same time, in the graphics decoder 504, from the graphics data 307S (#2 VIDEO STREAM) being read out from the disc 200 or the like, the graphics image for left eye (L graphics image) 307L and the graphics image for right eye (R graphics image) 307R (the left-eye image and the right-eye image of the graphics image) are generated, and output to the synthesizing unit 505. The synthesizing unit 505 superimposes (synthesizes) the main images 305L and 305R as well as the graphics images 307L and 307R, and outputs as a synthesized image 313.

The synthesizing unit 505 can further superimpose menu graphics 301, subtitles data 303, and others on the synthesized image.

### 2.2.2 Stereo image signal

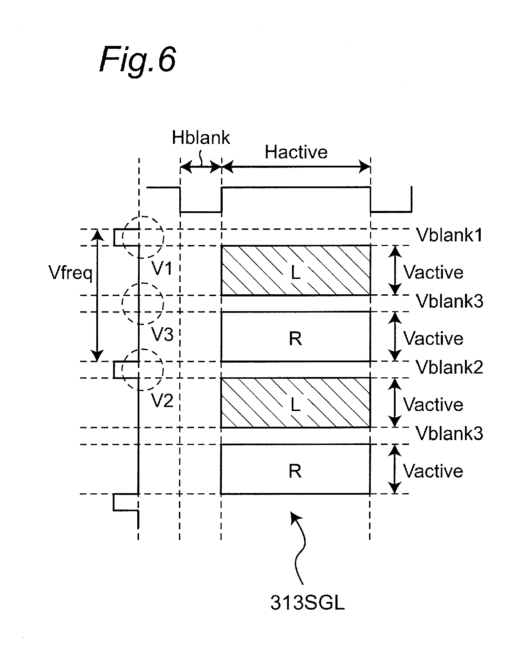

Fig. 6 is a diagram of example of a signal format used when a video signal (synthesized video signal) of a synthesized signal 313 being output as a stereo image signal by the video reproducing device 12. A synthesized video signal 313SGL contains, for example, a video signal of left-eye image (L) and a video signal of right-eye image (R) alternately, and a video signal for one frame of synthesized image is composed. The video reproducing device 12, when outputting synthesized video images at 60 frames/second, transfers a video signal of left-eye image (L) in 1/120 second, and a video signal of right-eye image in the next 1/120 second.

### 2.2.3 Depth and offset processing

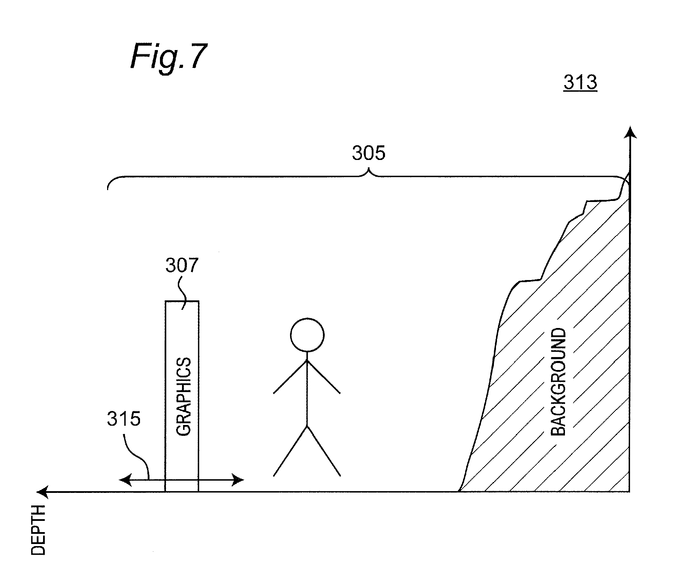

Referring now to Fig. 7, the process of depth of the stereo image of the synthesized image 313 is explained. Fig. 7 expresses the stereo sense (spreading in the depth-wise direction) to be recognized when the user views a stereo image in the lateral direction in the drawing (depth direction). The stereo image (synthesized image 313) represented in this diagram includes the background and a person standing at the front side (user side) as the main image 305. In the synthesized image 313, a graphics image 307 is superimposed at the front side (user side) of the main image 305. In this diagram, changing of apparent distance in the depth-wise direction (lateral direction in the diagram) of the graphics image 307 felt by the user in the direction of arrow 315 corresponds to adjustment of depth of the graphics image 307.

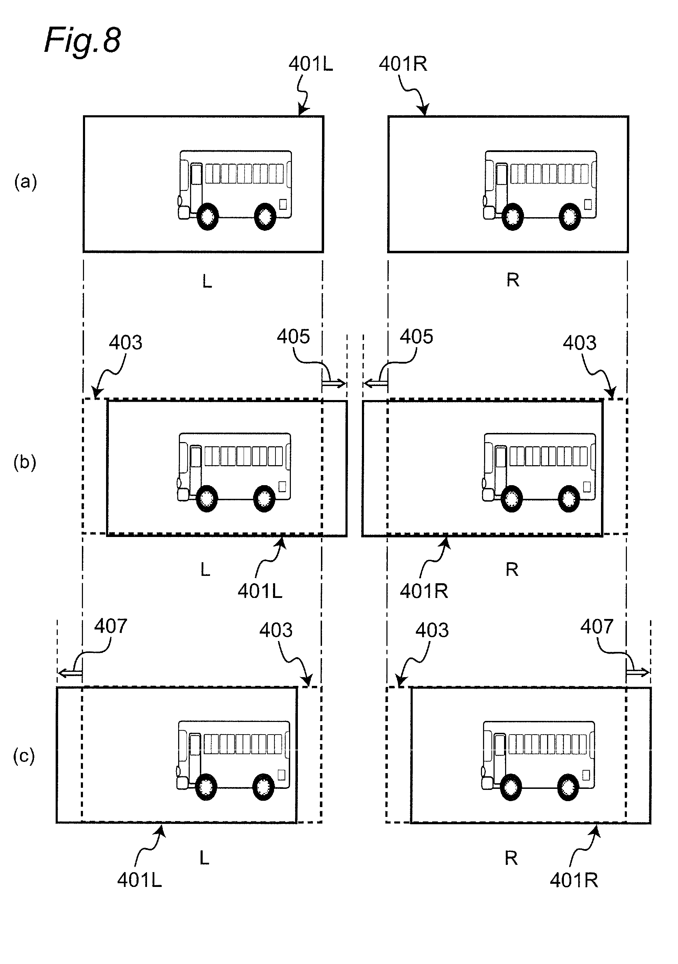

Fig. 8 is a diagram explaining the offset process of the image. By offset processing of the image, the depth of the image can be adjusted. To express an image three-dimensionally, generally, a right-eye image and a left-eye image having a parallax are used, and both images are deviated in opposite directions by a specified distance in the lateral direction of the image (by offset processing), and the sense of depth of image (the distance in the depth-wise direction) is expressed. The second AV processing unit 202 adjusts the depth of the image by changing the degree of offset (the deviating distance) based on the above depth data.

For example, Fig. 8 (a) is a diagram showing a left-eye image 401L and a right-eye image 401R when the degree of offset (offset amount) is zero. At this time, the distance felt by the user on an object in the image (for example, a bus) coincides with the image display screen.

Fig. 8 (b) is a diagram showing a case where an offset 405 is applied so that the left-eye image and the right-eye image 401L and 401R may be gathered in the middle direction of the screen, with respect to a reference frame 403 (the position of the image when the offset amount is zero). At this time, the user feels the apparent distance of the object in the image closer than the image display screen.

Fig. 8 (c) is a diagram showing a case where an offset 407 is applied so that the left-eye image and the right-eye image 401L and 401R may be farther from each other with respect to the reference frame 403. At this time, the user feels the apparent distance of the object in the image remoter than the image display screen.

In this manner, in the stereo image, by providing the left-eye image and the right-eye with a specified offset, a sense of distance of the image (the depth sense) recognized by the user can be adjusted. In other words, by adjusting the magnitude of offset and the direction of offset to be applied to the image, the depth of the image in the stereo image can be adjusted. The left-eye image 401L and the right-eye image 401R may be either different images considering the parallax, or may be identical images.

### 2.2.4 Depth adjustment process in the synthesizing unit

The following is the explanation about depth adjustment process of the graphics image in the synthesizing unit 505.

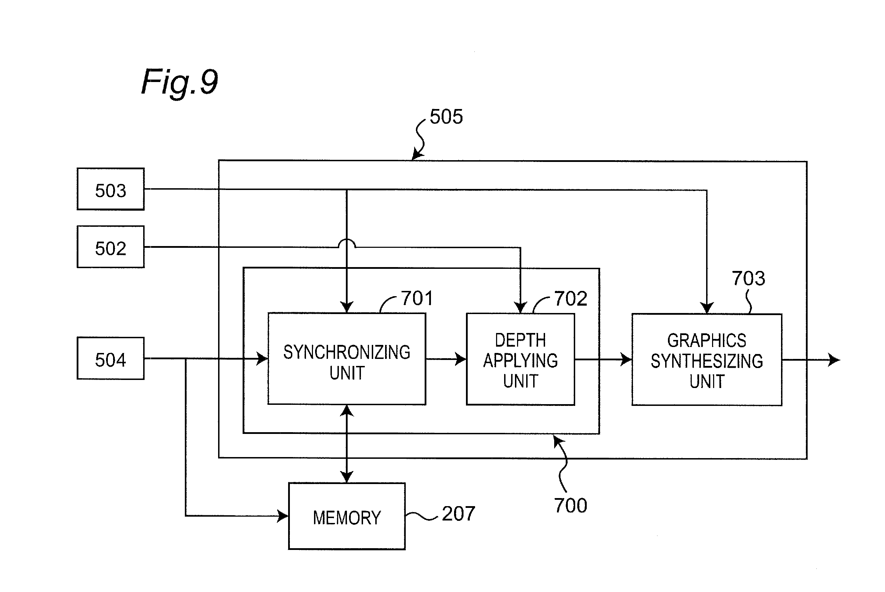

Fig. 9 is a block diagram showing the detail of the synthesizing unit 505. The synthesizing unit 505 includes a graphics image acquiring unit 700 which acquires a graphics image directly from the graphics decoder 504 or indirectly by way of the memory 207 and a graphics synthesizing unit 703 which synthesizes the main image and the graphics image. The graphics image acquiring unit 700 includes a synchronizing unit 701 which outputs a graphics image in synchronism with the main image and a depth applying unit 702 which adjusts the depth of the graphics image. The synchronizing unit 701 outputs the graphics image at a specified output timing so as to match with the timing of the synthesizing process executed in the graphics synthesizing unit 703 while keeping synchronism between the two images, the depth applying unit 702 properly adjusts the depth of the graphics image based on the depth data output from the depth decision unit 502, and sends the graphics image after depth correction to the graphics synthesizing unit 703.

The graphics image decoded by the graphics decoder 504 is temporarily written (depicted) in the memory 207, and the synchronizing unit 701, when confirming that the left-eye image and the right-eye image of the graphics image are written in the memory 207, reads out the corresponding graphics image written in the memory 207 and outputs this graphics image to the depth applying unit 702, so as to match with the synthesizing timing (the timing of synthesis process set so as to match with the generation of synthesized image until the timing of the output of the synthesized image from the graphics synthesizing unit 703).

### 2.2.4.1 Graphics image depth adjusting process and output process in a normal operation

The synchronizing unit 701 of the graphics image acquiring unit 700 outputs a graphics image so as to match with the timing of synthesis of the main image and the graphics image in the graphics synthesizing unit 703. For example, usually, at 60 Hz NTSC, the left-eye image and the right-eye image of the graphics image are output to the depth applying unit 702 in every 1/120 second, that is, in every about 8 msec. The depth applying unit 702 processes the graphics image by offset, based on the depth data output from the depth decision unit 502 and adjusts the depth of the graphics image, and outputs the graphics image after depth correction to the graphics synthesizing unit 703. The graphics synthesizing unit 703 synthesizes the main image with the graphics image entered through the depth applying unit 702 in synchronism with the main image, generates a (stereo) synthesized image, and outputs the (stereo) synthesized image signal to the second input/output unit 203.

However, if the graphics image output from the graphics decoder 504 has already been processed by offset, that is, when the graphics image has been generated based on the graphics data recorded in the disc 200 by two-plane method or the like, usually, the depth applying unit 702 does not further process the graphics image by offset. If the graphics image is not processed by offset, that is, when the graphics image is generated and output from the graphics decoder 504 based on the graphics data recorded in the disc 200 by two-plane plus one-offset method or one-plane plus one-offset method or the like, the depth applying unit 702 always processes the graphics image by offset based on the depth data.

The depth-corrected graphics image, which is output from the depth applying unit 702 so as to match with the timing (synthesis timing) of synthesis process in the graphics synthesizing unit 703, is synthesized with the main image in the graphics synthesizing unit 703, and a synthesized video signal is output at the reproduction timing of the synthesized image.

### 2.2.4.2 Graphics image depth adjusting process and output process in the absence of graphics image

When generating a graphics image as a stereo image, the graphics decoder 504 is required, within a limited time, to decode the graphics data to output a graphics image for the left eye, and further to decode the graphics data to output a graphics image for the right eye. It also requires a sufficient time for confirming the synchronism between the main image and the graphics image. Accordingly, due to the decoding performance and the depicting performance of the graphics decoder 504, the left-eye image and the right-eye image of the graphics image to be synthesized in synchronism with the main image may not be entered in the synchronizing unit 701 or the memory 207 by the specified timing (for example, the graphics image output timing from the synchronizing unit 701). Or, either one of the left-eye image and the right-eye image of the graphics image may be entered in the synchronizing unit 701 or the memory 207 by the specified timing. Even in the latter case, the entered graphics image for one eye cannot be utilized. That is because, for example, with the graphics image recorded in the two-plane system in the content and generated by the graphics decoder 504, a stereoscopic view is realized by setting a parallax between the left-eye image and the right-eye image. Therefore, without both the graphics image for the left eye and the graphics image for the right eye being available, the user is not provided with the information difference other than the parallax about the graphics image, and the user not only recognizes the graphics as a satisfactory stereo image, but also recognizes it as an defective image due to sudden error in recognition of position in the depth-wise direction. In the event of such situation where not both the images are provided, the synchronizing unit 701 cannot output the graphics image to be synthesized with the main image, at the reproduction timing of the main image.

To solve this problem, the video reproducing device 12 of the embodiment, if either one of the left-eye image and the right-eye image of the graphics image cannot be used at the output timing for outputting the graphics image from the synchronizing unit 701, outputs the left-eye image and the right-eye image of the graphics image for another output timing (for example, the graphics image of previous output) as the graphics image to be output at this output timing. In this manner, the video reproducing device 12 avoids the output of an image which will provides a feeling of strangeness to the user when the original graphics image is missing.

### 2.2.4.2a Depth adjustment process of graphics image generated from the graphics data recorded in two-plane plus one-offset system

The following is the explanation about processing when the graphics data is recorded in the content data by two-plane plus one-offset system.

When the data of graphics image is recorded in the video source by two-plane plus one-offset system, the graphics images output by the graphics decoder 504 are left-eye graphics image and right-eye graphics image having parallax but not offset. Therefore, even at a usual situation (while graphics images are normally transmitted from the graphics decoder 504), the depth applying unit 702 is processing the graphics images by offset based on the depth data of the graphics images of each frame (correcting the depth), and the graphics images after depth correction are output to the graphics synthesizing unit 703.

At an unusual situation (the desired graphics image cannot be used at a certain output timing, and a graphics image at other output timing (for other frame) is used), the depth applying unit 702 outputs the graphics image for another output timing (graphics image of other frame), by using the depth data of the desired graphics image to be output at the present output timing, and offsetting (correcting the depth).

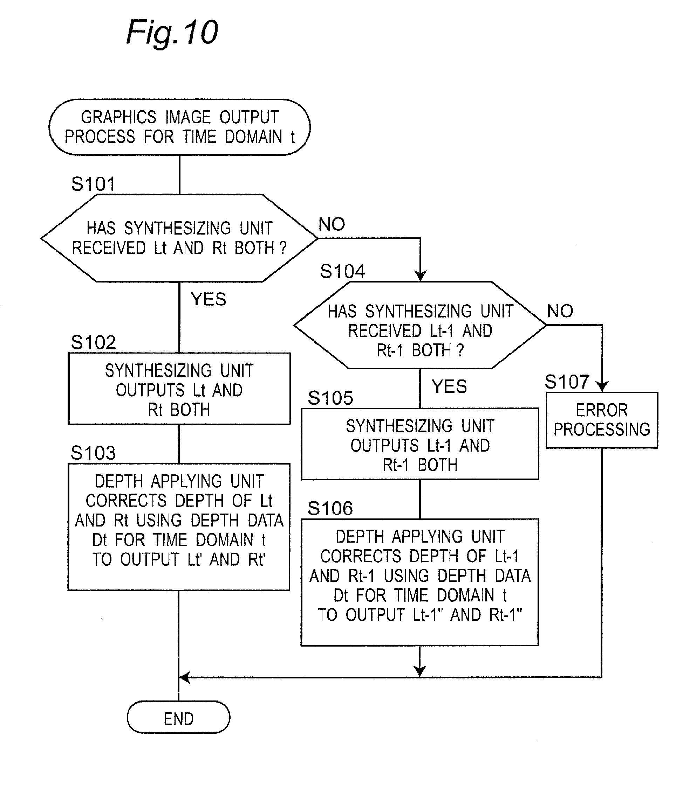

Fig. 10 is a flowchart of the graphics image output process executed by the graphics image acquiring unit 700 near the output timing in time domain t (each time domain corresponding to one frame of synthesized image signal).

The synchronizing unit 701 judges if the both images of the left-eye image (Lt) and the right-eye image (Rt) of the graphics images to be output have been already entered or not at the graphics image output timing in time domain t (whether usable or nor) (S101).

When both the left-eye image Lt and the right-eye image Rt are entered ("Yes" at S101), the synchronizing unit 701 outputs the left-eye image Lt and the right-eye image Rt to the depth applying unit 702 at an appropriate timing (S102). The depth applying unit 702 corrects the depth of the left-eye image Lt and the right-eye image Rt (processes by offset) by using the depth data Dt for graphics image in time domain t, and outputs the depth-corrected left-eye image Lt' and the depth-corrected right-eye image Rt' to the graphics synthesizing unit 703 (S103). The graphics synthesizing unit 703 synthesizes the graphics image and the main image, and outputs as synthesized video signal.

By contrast, if at least one of the left-eye image Lt and the right-eye image Rt is not entered in the synchronizing unit 701 ("No" at S101), the synchronizing unit 701 judges whether the both images of the left-eye image Lt-1 and the right-eye image Rt-1 of the graphics image of one preceding time domain t-1 are entered or not (whether usable or not) (S104).

When the both images of the left-eye image Lt-1 and the right-eye image Rt-1 are entered in the synchronizing unit 701 (when usable) ("Yes" at S104), the synchronizing unit 701 outputs the left-eye image Lt-1 and the right-eye image Rt-1 to the depth applying unit 702 at an appropriate timing (S105).

The depth applying unit 702 corrects the depth of the left-eye image Lt-1 and the right-eye image Rt-1 (processes by offset) by using the depth data Dt for the desired graphics image in time domain t, and outputs the depth-corrected left-eye image Lt-1" and the depth-corrected right-eye image Rt-1" to the graphics synthesizing unit 703 (S106). The graphics synthesizing unit 703 synthesizes the graphics image and the main image, and outputs as synthesized video signal.

If at least one of the left-eye image Lt-1 and the right-eye image Rt-1 is not entered in the synchronizing unit 701 (when not usable) ("No" at S104), error processing is executed (S107). In this error processing, instead of stopping the display, the previously displayed graphics image may be displayed again.

In this manner, in the video reproducing device 12 of the preferred embodiment, if at least one of the left-eye image and the right-eye image of the graphics image in a time domain cannot be used in synthesis process with the main image in an each time domain, a depth-corrected graphics image is generated with a graphics image for another time domain (other frame) by correcting its depth in such a way that the depth of the graphics image of the originally desired time domain to be synthesized with the main image is applied, the depth-corrected graphics image and the main image are synthesized, and the synthesized image is output. As a result, missing of the graphics image is prevented, the user does not feel strange, and a stereo image smoothly changing in the depth can be presented.

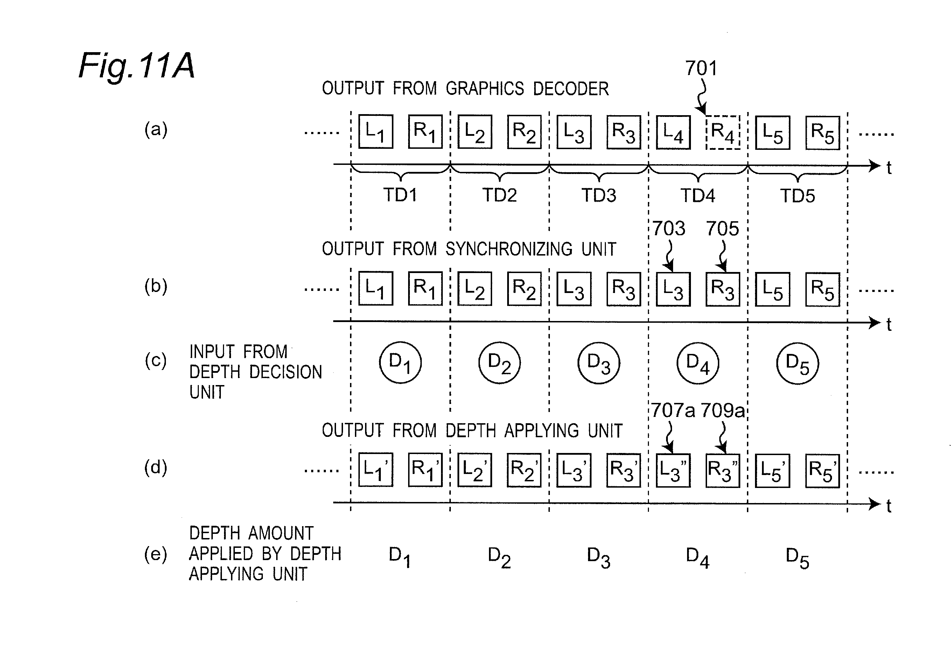

Fig. 11A is a diagram summing up the outputs from the graphics decoder 504, the synchronizing unit 701, and the depth applying unit 702 in each time domain (frame), and the depth data D (output from the depth decision unit 502), when the graphics data is recorded in the video source (data of the content in the disc 200) in the two-plane plus one-offset system. Herein, the depth data D is supposed to be recorded in the disc 200 on a frame to frame basis (one time domain) for each of the graphics image (or the main image). In the diagram, the graphics images enclosed in solid-line squares as output from the graphics decoder are graphics images usable in the synchronizing unit 701 at the graphics image output timing of the synchronizing unit 701 in each time domain, and the graphics images enclosed in broken-line squares are graphics images not usable in the synchronizing unit 701 at the same output timing in each time domain.

The graphics decoder 504 outputs left-eye images (L1, L2, ...) and right-eye images (R1, R2, ...) of graphics images so that the output matches with the timing of outputting the graphics images in each time domain (TD1 to TD5) by the synchronizing unit 701. In the example shown in Fig. 11A, the graphics decoder 504 has failed to output the right-eye image R4 (701) of the graphics image by the specified timing for time domain TD4.

In this case, the synchronizing unit 701 judges that the right-eye image R4 (701) is not provided, and to time domain TD4, the left-eye image L3 (703) and the right-eye image R3 (705) of a previous time domain TD3 (one previous frame) are output.

Supposing the depth data of graphics images in each time domain output from the depth decision unit 502 to be D1 to D5, respectively, the depth applying unit 702 corrects (offsets) the depths in time domains TD1 to TD3, by using the corresponding depth data D1 to D3, on the left-eye images L1 to L3 and the right-eye images R1 to R3 of the graphics images of each time domain, and depth-corrected left-eye and right-eye images (L1' to L3' and R1' to R3') of the graphics images are output. In time domain TD4, the depth is corrected (offset) by using depth data D4 of time domain TD4 on graphics images L3 and R3, and depth-corrected left-eye and right-eye images L3" and R3" of the graphics images are output.

In this manner, if a graphics image is missing (not usable) in a certain time domain (frame), the video reproducing device 12 of the preferred embodiment corrects the depth of the left-eye image and the right-eye image of the graphics image of another time domain (frame) by using the depth data of the graphics image to be originally output in the present time domain, and outputs the depth-corrected graphics images, thereby preventing display of defective graphics images on the video display device 11. As a result, in the video reproducing device 12, even if the original graphics image to be output from the synchronizing unit 701 in synchronism with the timing of synthesizing with the main image cannot be used, output of defective graphics images which provide a feeling of strangeness to the user can be prevented. Moreover, since the depth of the graphics image changes smoothly along the lapse of time, a smoothly changing stereo image can be delivered. The depth data does not require decoding, unlike graphics data or video data, and possibility of missing of depth data at a specific timing in each time domain is very low. If depth data cannot be used, the depth data of graphics images of the present time domain can be estimated by using the depth data of graphics images of previous time domain.

In the meantime, if the depth information of the graphics images is not recorded in the disc 200 as data of each frame (each time domain), other information (for example, depth data of main image) can be used instead.

Moreover, the depth data can be determined based on the input from the user. For example, when the user desires to provide the graphics image with a direction such as fade-out effect of sweeping out a displayed image to a further side, the direction is received from the user, and the depth data may be acquired by the fade-out sequence recorded in the flash memory 206 or the like, and be utilized.

Incidentally, the depth information may be recorded in sequence, if not recorded in every frame (every time domain). For example, the depth information may be sequence information such as departing at a rate of 1 meter per second. In such a case, because depth data of the graphics image of each time domain (frame) can be determined by a simple calculation, the depth data of graphics image of each frame can be determined by calculation.

In this example, if missing of graphics image in a certain time domain is detected, the graphics image of one previous time domain (one previous frame) is output again, but the graphics image to be output again is not limited to the graphics image of one previous time domain, but the graphics image of second or further previous time domain may be output again. If available, moreover, a graphics image of a later time domain may be utilized.

### 2.2.4.2b Depth adjustment process of graphics image generated from the graphics data recorded in one-plane plus one-offset system

The following is the explanation about processing when the graphics data is recorded in the content data by one-plane plus one-offset system.

When the data of the graphics image is recorded by one-plane plus one-offset system, the graphics images output from the graphics decoder 504 are left-eye graphics image and right-eye graphics image having neither parallax nor offset (that is, one graphics image). That is, in Fig. 11A, it corresponds to a case of Lt = Rt (t: 1 to 5). Even in such a case, in the same manner as when graphics data is recorded in the video source by two-plane plus one-offset system, output of defective graphics image can be prevented.

The synchronizing unit 701, if the graphics image is not entered from the graphics decoder 504 by the specified output timing (when not usable), makes use of the graphics image of a preceding time domain, corrects the depth (offsets) of the graphics image by using the depth data of the graphics image of the present time domain, and outputs the depth-corrected left-eye image and right-eye image. As a result, output of defective graphics image is prevented, the depth of the graphics image changes smoothly along the lapse of time, and therefore a stereo image changing smoothly can be output.

### 2.2.4.2c Depth adjustment process of graphics image generated from the graphics data recorded in two-plane system

The final explanation is about processing when the graphics data is recorded in the content data by two-plane system.

When the data of the graphics image is recorded by two-plane system, the graphics images output from the graphics decoder 504 are left-eye graphics image and right-eye graphics image having parallax and offset. In a normal operation (when the graphics images are normally sent out from the graphics decoder 504), the depth applying unit 702 generally outputs the entered graphics images directly without offsetting the graphics images. In unusual time (when the graphics images at the output timing cannot be utilized at the graphics image output timing of the synchronizing unit 701, and a graphics image of another time domain is output from the synchronizing unit 701), the depth applying unit 702 operates as follows, by offsetting (correcting the depth) the graphics image in the other time domain by using the depth data of the original graphics image to be synthesized with the main image in the present time domain and the depth data of graphics image of the other time domain, and outputting the graphics image as the depth-corrected graphics image.

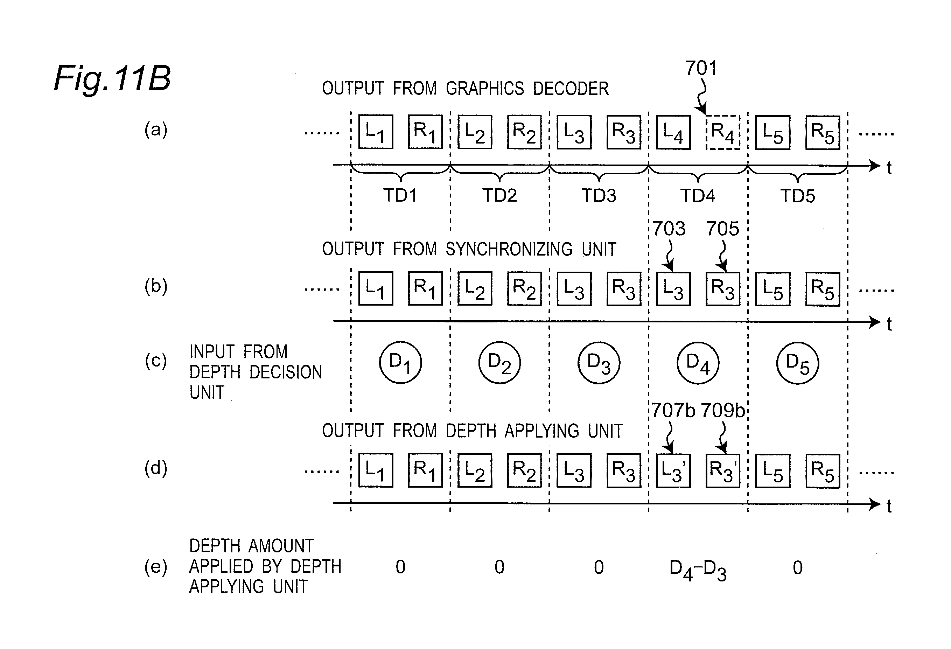

Fig. 11B is a diagram summing up the outputs from the graphics decoder 504, the synchronizing unit 701, and the depth applying unit 702 in each time domain (frame), and the depth data D (output from the depth decision unit 502), when the graphics data is recorded in the video source (data of the content in the disc 200) in the two-plane system. In this diagram, too, the graphics images enclosed in solid-line squares as outputs from the graphics decoder are graphics images usable in the synchronizing unit 701 at the graphics image output timing of the synchronizing unit 701 in each time domain, and the graphics images enclosed in broken-line squares are graphics images not usable in the synchronizing unit 701 at the same output timing in each time domain.

In this case, the left-eye image and the right-eye image of the graphics image output from the graphics decoder 504 have been already processed by offset. Hence, the depth applying unit 702 may not need to further correct the depth as far as the original graphics images in the same time domain are entered from the synchronizing unit 701 in each time domain.

In the example shown in Fig. 11B, the graphics decoder 504 has failed to output the right-eye image R4 (701) of the graphics image by the specified timing in time domain TD4.

In this case, the synchronizing unit 701 judges that the right-eye image R4 (701) is not provided, and in time domain TD4, the left-eye image L3 (703) and the right-eye image R3 (705) of one previous time domain TD3 are output at the specified output timing.

The depth applying unit 702, in time domain TD4, corrects (offsets) the depth only for (D4-D3) by using the depth data D of the graphics image in time domain TD3 and the depth data D4 of the original graphics image in time domain TD4, on the graphics images L3 and R3, and outputs the depth-corrected left-eye image L3' and right-eye image R3' of the graphics images. Herein, the depth is corrected only for the portion of depth difference (D4-D3) because of the following reason. The graphics images L3 and R3 in time domain TD3 have been already corrected (offset) in depth by the portion of depth D3. Accordingly, the depth applying unit 702 outputs by further correcting the depth of graphics images L3 and R3, by depth (D4-D3), in order to correct the depth of graphics images L3 and R3 to the depth D4 of the original graphics image in time domain TD4.

### 2.2.5a Processing in memory and synchronizing unit, example 1

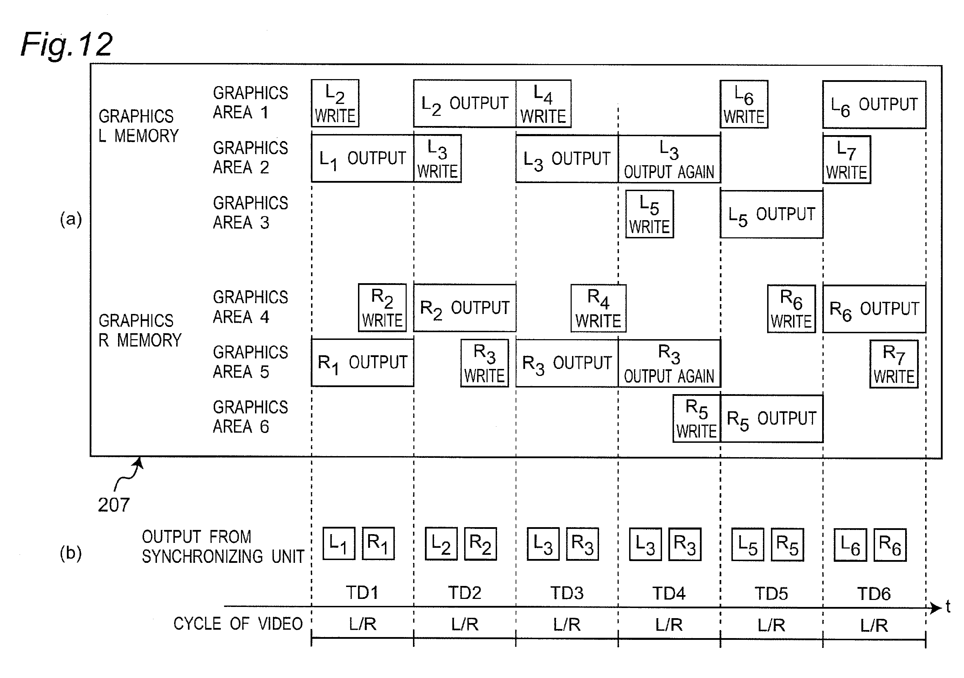

Fig. 12 is a diagram shown along the time axis relating to an example of writing and reading process of graphics images in the case of the memory 207 having memory areas for three images each for the left-eye image and the right-eye image of graphics images. Areas 1 to 3 (areas 4 to 6) of graphics L memory (R memory) of the memory 207 are respectively recording areas for temporarily storing the left-eye image (right-eye image) of the graphics images.

For example, in time domain TD1, in graphics area 1 and graphics area 3, left-eye and right-eye images L2 and R2 of the graphics images are depicted (written), and in the meantime, graphics images L1 and R1 are read out from graphics area 2 and graphics area 4, and are input to the synchronizing unit 701, and are output from the synchronizing unit 701.

In time domain TD2, by changing over the graphics areas every time the time domain is advanced in synchronism with the reproduction timing of a synthesized image, in graphics area 2 and graphics area 4, left-eye and right-eye images L3 and R3 of the graphics images are depicted (written), and in the mean time, left-eye and right-eye images L2 and R2 of the graphics images are read out from graphics area 1 and graphics area 3, and are input to the synchronizing unit 701, and are output from the synchronizing unit 701. In this way, by alternately changing over the memory areas of depicting (writing) and output, the graphics images are not output in the midst of depicting, and the graphics images can be synthesized by matching with the timing of the main image, so that a synthesized image can be output.

Herein, in the case of writing of graphics images in the memory 207 in time domain TD3, for example, writing of left-eye image L4 into the memory 207 (input from the graphics decoder 504) has been completed within time domain TD3, but writing of right-eye image R4 into the memory 207 is not completed yet at the start point of time domain TD4.

In such a case, the synchronizing unit 701 judges that there is no input of both left-eye and right-eye images of the graphics images ("No" at step S101 in Fig. 10), and graphics images L3 and R3 of the previous time domain TD3 are output again (step S105 in Fig. 10).

In time domain TD4, in graphics areas 3 and 6, left-eye and right-eye images L5 and R5 of the graphics images in time domain TD5 are written.

### 2.2.5b Processing in memory and synchronizing unit, example 2

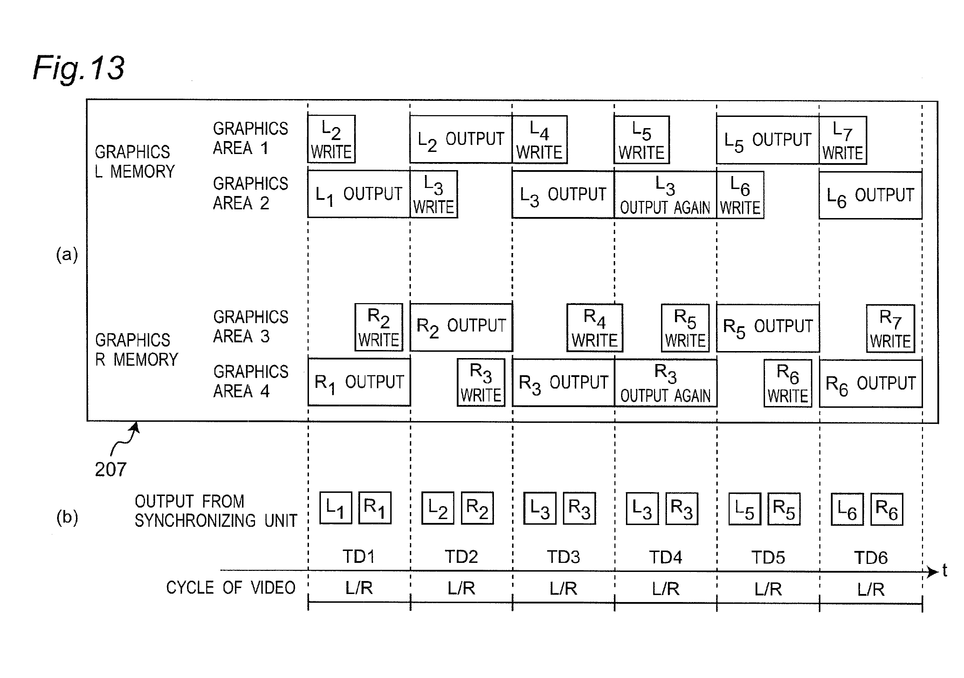

Fig. 13 is a diagram shown along the time axis relating to an example of writing and reading process of graphics images in the case of the memory 207 having memory areas for two images each for the left-eye image and the right-eye image of graphics images.

Same as in the foregoing example, it is supposed that writing of right-eye image R4 of the graphics image into the memory 207 in time domain TD3 has not been completed yet at the start point of time domain TD4.

In such a case, same as in the foregoing example, the synchronizing unit 701 judges that there is no input of both left-eye and right-eye images of the graphics images ("No" at step S101 in Fig. 10), and graphics images L3 and R3 of the previous time domain TD3 are output again (step S105 in Fig. 10).

In time domain TD4, in graphics areas 1 and 3, the left-eye and right-eye images L5 and R5 of the graphics images in time domain TD5 are written.

### 2.2.5c Processing in memory and synchronizing unit, example 3

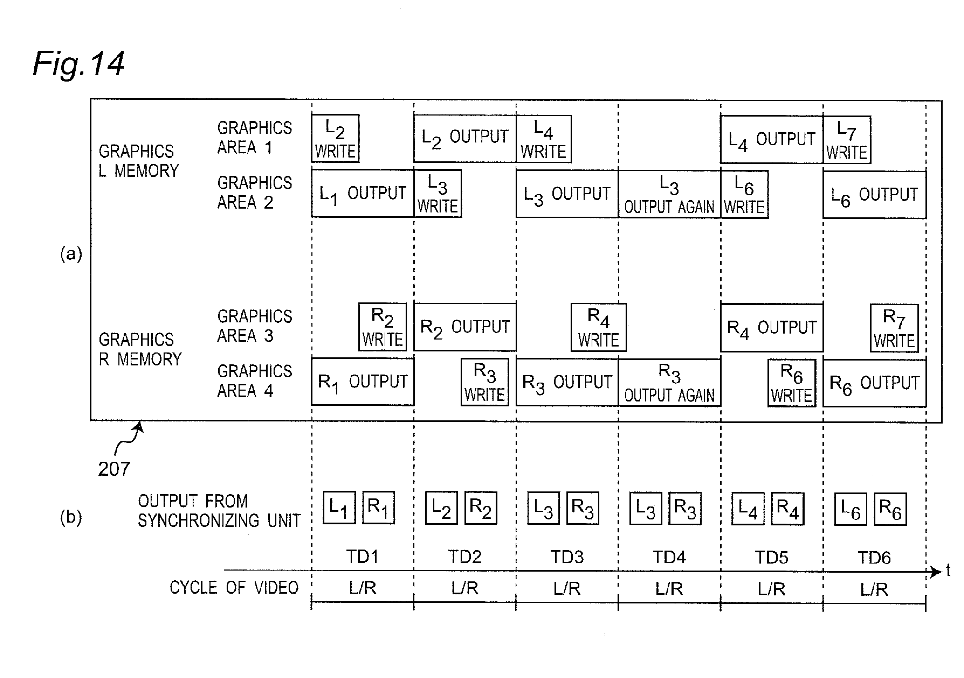

Fig. 14 is a diagram shown along the time axis relating to another example of writing and reading process of graphics images in the case of the memory 207 having memory areas for two images each for the left-eye image and the right-eye image of graphics images.

Same as in the foregoing example, it is supposed that writing of right-eye image R4 of the graphics image into the memory 207 in time domain TD3 has not been completed yet at the start point of time domain TD4.

In such a case, same as in the foregoing example, the synchronizing unit 701 judges that there is no input of both left-eye and right-eye images of the graphics images ("No" at step S101 in Fig. 10), and graphics images L3 and R3 of the previous time domain TD3 are output again (step S105 in Fig. 10).

In time domain TD4, however, in this example, in graphics areas 1 and 3, left-eye and right-eye images L5 and R5 of the graphics images in time domain TD5 are not written, unlike the foregoing example. In time domain TD4, only re-output of left-eye and right-eye images L3 and R3 of graphics images in time domain TD3 is performed.

In time domain TD5, left-eye and right-eye images L4 and R4 of graphics images in time domain TD4 are output and left-eye and right-eye images L6 and R6 of graphics images for time domain TD6 are written, and in time domain TD6, the images L6 and R6 are output.

In this manner, in the event of missing of graphics image in a certain time domain TDx, for example, the synchronizing unit 701 may be configured to re-output again the graphics image in previous time domain TDx-1 to time domain TDx, and to output the graphics image of TDx to time domain TDx+1. Of course, also in this case, the depth applying unit 702 corrects the depth of the graphics image to be output by the synchronizing unit 701 by using the depth data for the present time domain.

The video reproducing device 12 of preferred embodiment 1 is a video reproducing device for synthesizing and outputting a first image (main image) and a second image (graphics image) of a stereo image, and includes video and graphics decoders 503 and 504 for acquiring a first image (main image) and a second image (graphics image) to be synthesized in one frame, and a synthesizing unit 505 for generating a synthesized image by synthesizing the first image and the second image acquired from the video and graphics decoders 503 and 504 in synchronism, and outputting a synchronized image, and, if the video and graphics decoders 503 and 504 fail to acquire the second image to be synchronized with one frame when generating a synthesized image, the synthesizing unit 505 synthesizes the second image to be synthesized with the first image in another frame than the one frame, with the first image to be synthesized with the one frame.

The video reproducing device of the preferred embodiment is capable of generating a graphics image (second image (stereo image)) to be synthesized into a main image (first image) and main image. From the data of the content recorded in an optical disc (video source) such as BD-ROM, the video reproducing device synthesize both images, and outputs the synthesized image as a stereo image. This video reproducing device is, if failing to use at least either one of the left-eye image and the right-eye image of the graphics images to be used in the synthesis at the timing of synthesis between the main image and the graphics image, designed to use the left-eye image and the right-eye image of the graphics image to be used in synthesis for another time domain (another synthesized image frame) for synthesis. In this case, the video reproducing device first corrects the depth of the graphics image so as to match with the depth of the graphics image supposed to be used originally in the synthesis, and then synthesizes with the main image and outputs a synthesized image. Hence, the video reproducing device is capable of preventing missing of the graphics image, and thus avoids appearance of unnatural changes in the depth of the graphics image. In this manner, in the video reproducing device 12 of the preferred embodiment, even if a graphics image cannot be prepared at the timing of reproduction of the main image to be originally synthesized, output of defective graphics image can be prevented by using the graphics image of previous output.

Still more, in the event of missing (being not usable) of either one of the graphics image for the left eye and the graphics image for the right eye, out of the graphics images of the past time domains (synthesized image frames), graphics images (being usable) having both the graphics image for the left eye and the graphics image for the right eye are used. As a result, between the graphics image for the left eye and the graphics image for the right eye, a difference other than parallax and offset are not caused, thereby preventing the user from feeling unusual about the image.

Further, by the second AV processing unit 202, the graphics images is properly corrected in depth and output by using the depth data based on the depth information recorded in the disc 200, and the depth information recorded in the flash memory 206. Hence, in the event of interpolation of missing (not usable) graphics image by using the graphics image for the left eye and the graphics image for the right eye at the previous reproduction timing, or, for example, when reproducing graphics images continuously changing in depth, any image giving strange feeling as a stereo image is not displayed and a stereo image smoothly changing in depth can be output.

### Preferred embodiment 2

A video reproducing device according to another preferred embodiment is explained below. In this preferred embodiment, if decoding of subtitles data is not prepared before the timing of synthesis process with the main image to be synchronized, the same process as in processing of graphics image in preferred embodiment 1 is carried out, and the subtitles image previously displayed is displayed again. Depth correction of subtitles image is executed according to the depth information recorded in the disc 200, or the command entered by the user. In the explanation of preferred embodiment 2, same components as in preferred embodiment 1 are identified with the same reference numerals to omit repeated explanations.

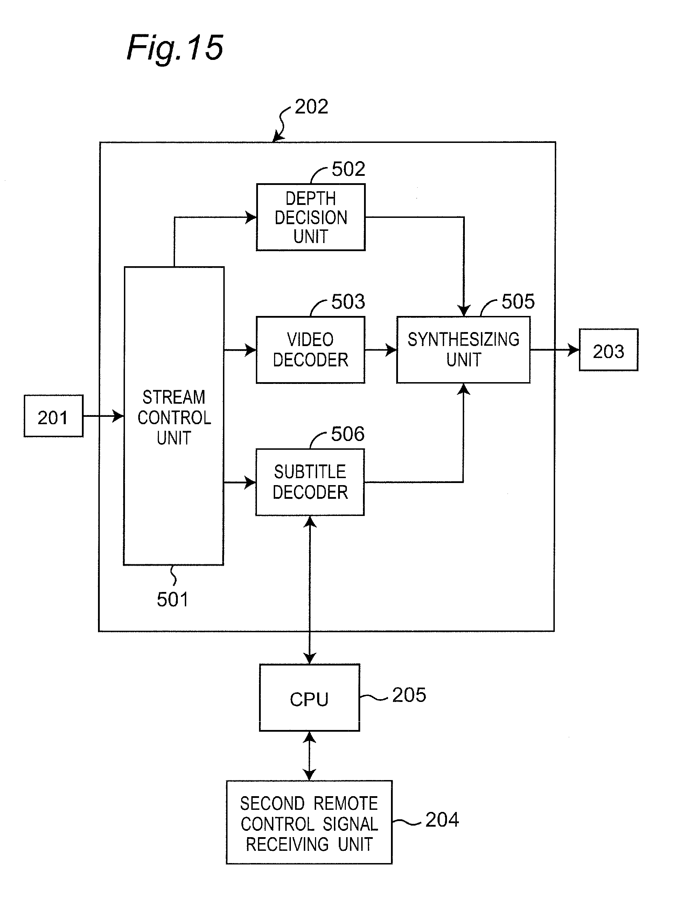

Fig. 15 is a block diagram of a second AV processing unit 202 of a video reproducing device 12 in preferred embodiment 2. In Fig. 15, a subtitle decoder 506 is a decoder which decodes subtitles data entered from a disc 200, and generates a subtitles image to be superimposed on a main image (video image). The subtitles image decoded and obtained by the subtitle decoder 506 is turned on or off to be superimposed or not on the main image when a command is sent to a synthesizing unit 505 by a CPU 205 according to the received user's manipulation.

In this manner, in the video reproducing device 12 in preferred embodiment 2, as for the subtitles, too, the subtitles image of previous output is used if generation of both images of the left-eye and right-eye images of subtitles image of stereo image is not matched with the synthesis timing with the main image. Further, by the second AV processing unit 202, the subtitles image is properly corrected in depth and output, by using the depth data based on the depth information recorded in the disc 200, or the depth information recorded in a flash memory 206. As a result, the depth of subtitles image can be changed properly along the time. For example, if the depth of subtitles image is changed along the time, any stereo image that provides a feeling of strangeness to the user is not displayed, and the video can be reproduced smoothly. Further, for example, when presenting an effect of the subtitles rotating and departing, a smooth change of depth can be realized.

### Second AV processing unit of preferred embodiments 1 and 2

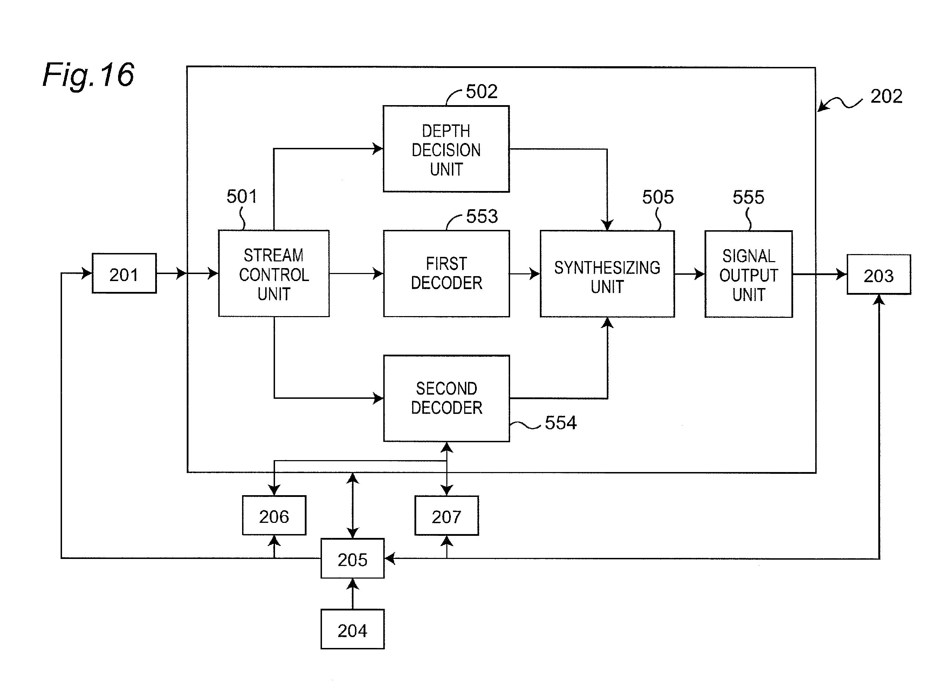

Fig. 16 shows the detail of configuration of the second AV processing unit 202 of the video reproducing device 12 in preferred embodiments 1 and 2. The second AV processing unit 202 may be composed as, for example, one or two or more semiconductor devices. The second AV processing unit 202 includes a stream control unit 501 which receives stream data including a 3D content from a video source such as disc 200, outputs the video stream of a first image to a first decoder 553, outputs the video stream of a second image to a second decoder 554, and outputs depth information included in the stream data to a depth decision unit 502, the depth decision unit 502 which determines the depth of the image of a 3D content based on the depth information and outputting as depth data, the first decoder 553 which decodes the stream data of the first image, and outputs a first image (main image), the second decoder 554 which decodes the stream data of the second image and outputs the second image (graphics image or subtitles image), a synthesizing unit 505 which synthesizes the second image with the first image in synchronism and outputs a synthesized video signal, and a signal output unit 555 which outputs the synthesized video signal. Herein, the synthesizing unit 505 has the same function as the synthesizing unit 505 in preferred embodiments 1 to 3. The signal output unit 555 may be an output terminal.

As explained herein, the second AV processing unit 202 in preferred embodiments 1 and 2 may be composed as a semiconductor device.

### Preferred embodiment 3

Another embodiment of a video reproducing device is explained below. In this preferred embodiment, the video reproducing device is capable of acquiring depth data of graphics image, even if depth information is not recorded as other data than image in a video source such as disc 200. In the explanation of embodiment 3, same components as in preferred embodiments 1 and 2 are identified with same reference numerals to omit repeated explanations.

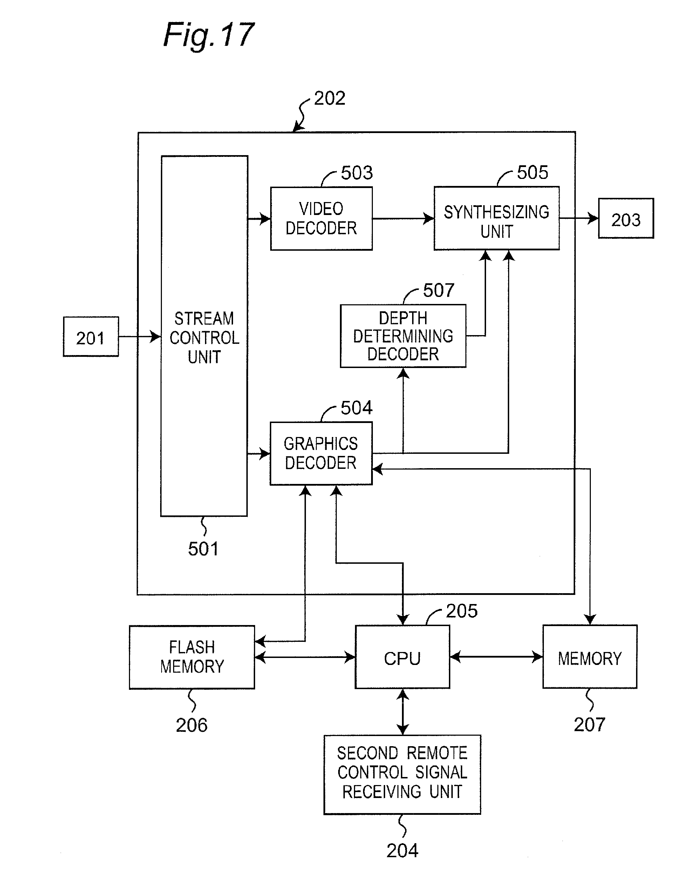

Fig. 17 is a block diagram of a second AV processing unit 202 of a video reproducing device 12 in embodiment 3. In Fig. 17, a depth determining decoder 507 is a decoder for determining the depth of the image decoded by a graphics decoder 504. The depth determining decoder 507 determines an average depth from contents of the graphics image output from the graphics decoder 504, and outputs it as depth data.

Herein, the graphics image output by the graphics decoder 504 is a stereo image, and the distance (depth) in the depth-wise direction of the stereo image is proportional to the deviation amount (offset amount) in the lateral direction of the left-eye and right-eye images of the graphics images. Accordingly, the depth determining decoder 507 compares the left-eye and right-eye images of the graphics images, and detects the deviation amount of the two images, and acquires the average deviation amount as the depth data.

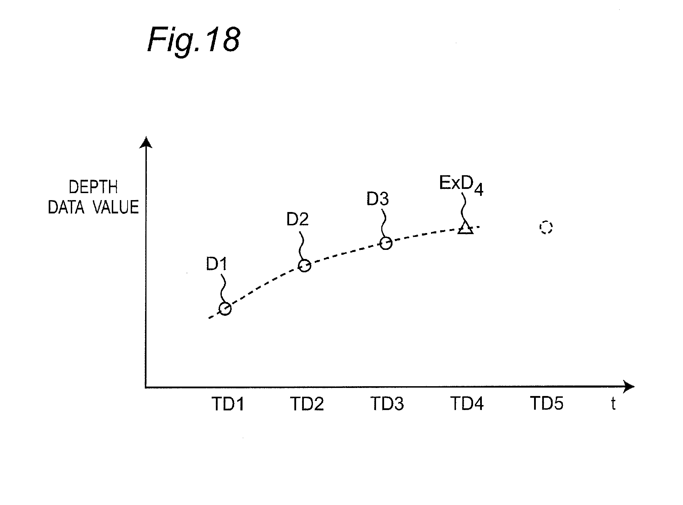

Moreover, the depth determining decoder 507 can also obtain the depth data by estimating (extrapolating). For example, as shown in Fig. 18, when the depth data D1 to D3 have been calculated for the time domain TD1 to time domain TD3, the depth determining decoder 507 calculates the depth value of the time domain TD4 recursively from the depth data D1 to D3 of time domain TD1 to time domain TD3, and acquires extrapolated depth data ExD4.

The video reproducing device 12 of preferred embodiment 3 is a video reproducing device for synthesizing and outputting a first image (main image) and a second image (graphics image) of a stereo image, and includes video and graphics decoder 503 and 504 for acquiring the first image (main image) and the second image (graphics image) to be synthesized in one frame, and a synthesizing unit 505 for synthesizing the first image and the second image acquired from the video and graphics decoders 503 and 504, and generating a synthesized image, and outputting the synthesized image, and the synthesizing unit 505, if the video and graphics decoders 503 and 504 fail to acquire the second image to be synthesized with one frame when generating a synthesized image, synthesizes a second image to be synthesized with the first image in another frame than the one frame with the first image to be synthesized with the one frame. Moreover, the depth when the second image is displayed as a stereo image is determined by the depth information, and if the video and graphics decoders 503 and 504 fail to acquire the second image to be synthesized with one frame at the time of synthesis of the first image and the second image to be synthesized in one frame, the synthesizing unit 505 determines the depth information about the second image to be synthesized with one frame, based on contents of the second image to be synthesized with the first image in other frame, and by using the determined depth information, synthesizes the second image to be synthesized with the first image in another frame with the first image.

In this manner, in the video reproducing device 12 of preferred embodiment 3, the depth determining decoder 507 detects the depth from the graphics image and outputs as depth data. Accordingly, in a certain time domain, if generation of graphics image is not ready for output timing of the graphics image from the synchronizing unit 701, by using the depth data acquired by estimating (extrapolating) from the depth data of the graphics image in other previous time domain, the depth of the graphics image in other time domain (frame) is corrected, and it is synthesized with the main image at synthesis timing of the pertinent time domain, and a graphics image is obtained. Therefore, if generation of graphics image is not ready for output timing from the synchronizing unit 701, a graphics image similar to the graphics image originally intended to be output from the synchronizing unit 701 is corrected in depth properly and is output, and is synthesized with the main image, and output to the video display device 11 as a synthesized video signal. Accordingly, the user does not have strange feeling about the displayed image. In the video reproducing device 12 of the preferred embodiment, even if the depth information is not recorded as other data than image in the video source such as disc 200, defective image is not output, and reproduction of stereo image smoothly changing in time can be realized.

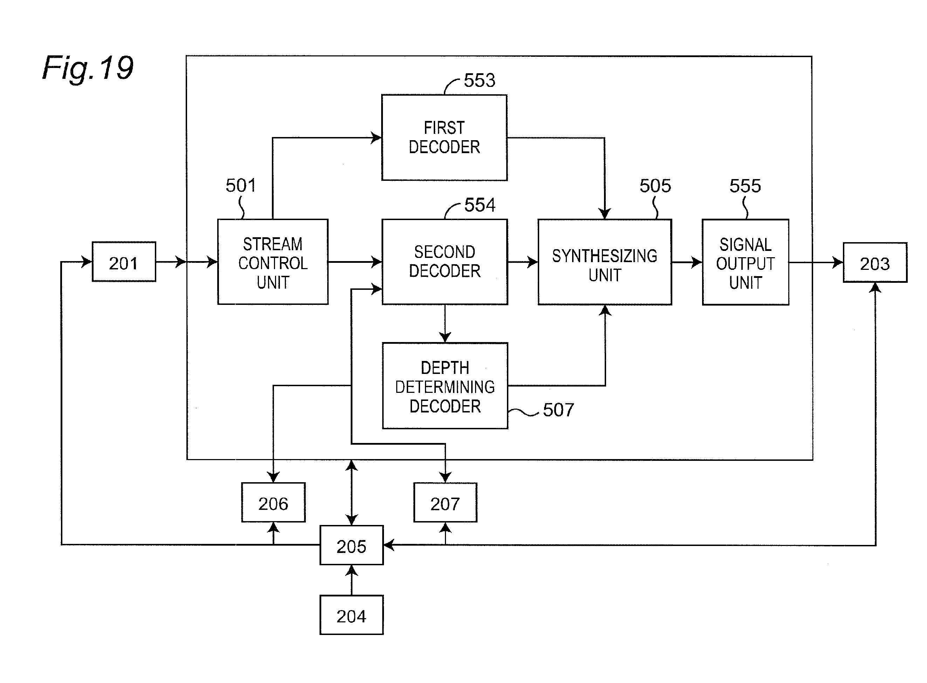

Fig. 19 shows the detail of configuration of the second AV processing unit 202 of the video reproducing device 12 of preferred embodiment 3. The second AV processing unit 202 may be composed as, for example, one or two or more semiconductor devices. The second AV processing unit 202 includes a stream control unit 501 which receives stream data including a 3D content from a video source such as disc 200, outputs a video stream of a first image to a first decoder 553 and outputs a video stream of a second image to a second decoder 554, the first decoder 553 which decodes the stream data of the first image and outputs the first image (main image), the second decoder 554 which decodes the stream data of the second image, and outputs the second image (graphics image or subtitles image), a depth determining decoder 507 which acquires the depth data of the second image based on contents of the second image output from the second decoder 554, a synthesizing unit 505 which synchronizes and synthesizes the first image and the second image and outputs a synthesized video signal, and a signal output unit 555 which outputs the synthesized video signal. Herein, the synthesizing unit 505 has the same function as the synthesizing unit 505 in preferred embodiments 1 to 3. The signal output unit 555 may be an output terminal.

As explained herein, the second AV processing unit 202 in preferred embodiment 3 may be also composed as a semiconductor device.

### Modified examples

The video reproducing device 12 of preferred embodiments 1 to 3 may be changed and modified in various forms. A modified example of the video reproducing device 12 is explained below.

In the video reproducing device 12 of preferred embodiments 1 to 3, on the video image (main image), a graphics image and a subtitles image are synthesized, but the images to be synthesized are not particularly limited. For example, in synchronism with the video image (main image), other video image (sub-image) may be output, and the both images may be synthesized. In this case, too, unless the main image and the sub-image respectively correspond to the left-eye and right-eye images, the user may recognize the image to be strange. According to the video reproducing device 12 of the preferred embodiment, while keeping correspondence between the left-eye and right-eye images, a smooth stereo image can be expressed by correcting the depth of the image and outputting.

In the graphics image (second image), the left-eye and right-eye images may be identical images. In such a case, unless the depth is adjusted, the graphics image seems to be two-dimensional, but by adjusting the depth, the graphics image can be localized in the depth-wise direction.

As an example allowing the user to specify the depth, a sequence recorded in the flash memory 206 is shown, but the memory is not particularly limited, and, for example, a memory card or the same memory as the memory 207 may be used.

The depth data used in depth correction of graphics image may be also information other than the depth information of graphics image, and, for example, depth information of main image may be used. In this case, too, the same effects as explained herein may be obtained.

Even if the both left-eye and right-eye images of the graphics image to be originally output in a certain time domain may be usable, the depth may be corrected by offset processing routinely.

The graphics image in other time domain used when the graphics image is not ready may not be always limited to the graphics image of one previous time domain.

In the foregoing preferred embodiments, the video source is shown by an example of the content recorded in a BD-ROM, but the video source is not limited to the BD-ROM and includes other optical disc, hard disk, and all other video source media.

In the preferred embodiments, the main image (first image), and the graphics image or subtitles image (second image) are generated from video data included in a same video source (content), but the video source of the first image and the video source of the second image (content) may be different from each other.

In the preferred embodiments, the first image is a main image of a certain content, but the first image is not particularly limited and may be any arbitrary image. The second image of stereo image is not limited to subtitles image or graphics image, and may be any arbitrary image.

In the preferred embodiments, the first image may be either stereo image or non-stereo image. The video reproducing device in the preferred embodiments may synthesize a stereo image of a second image with a first image and output a synthesized image as a stereo image.

The second image which composes a stereo image may be recorded in a video source in any arbitrary system, including two-plane system, two-plane plus one-offset system, and one-plane plus one-offset system.

The video reproducing device 12 of the preferred embodiments is not limited to be applied to BD-ROM and other optical discs, but is applicable to any stereo image reproducing device, such as a television or a game machine, to be used in applications for displaying a stereo image by combining images and graphics.

The video reproducing device of the preferred embodiments sends out a stereo image signal by frame sequential system, but the system of stereo image signal is not limited to this method and any other arbitrary system may be used.

The stereo image signal may be a video signal including a left-eye image (an image for the left eye) and a right-eye image (an image for the right eye) as video signal for one frame. However, in the video reproducing device of the preferred embodiments, the format of the stereo image signal is not particularly limited.

### Summary

The video reproducing device 12 of the individual preferred embodiments is capable of synthesizing (superimposing) a second image ((stereo) graphics image) on a first image. In the synthesizing process, the video reproducing device 12 synthesizes by synchronizing between the first image and the second image. If the second image ((stereo) graphics image) is missing, the video reproducing device 12 corrects a second image of other time domain (frame) in depth by using the depth data of the second image of the present time domain (frame), and outputs.

The graphics image in preferred embodiments 1 and 3, and the subtitles image in preferred embodiment 2 are examples of stereo graphics images.

Accordingly, even if the graphics image is missing, a graphics image changing smoothly without interruption can be presented to the user.

In the video reproducing device 12, if at least one of the left-eye graphics image and the right-eye graphics image of a stereo graphics image cannot be used, the missing period is interpolated by using the left-eye graphics image and the right-eye graphics image of a stereo graphics image of a previous time domain (frame) of the present time domain (frame), and an output is issued.

Hence, even if either one of the left-eye graphics image and the right-eye graphics image cannot be used, it is possible to prevent the user from feeling strange about the image due to deviation other than parallax or offset between the left-eye graphics image and the right-eye graphics image.

### Industrial Applicability

The video reproducing device of any of the embodiments is useful as a video reproducing device for reproducing a stereo image synthesized of a plurality of images.

### Reference Signs List

- 11: video display device
- 12: video reproducing device
- 13: 3D glasses
- 101: first input and output unit
- 102: first AV processing unit
- 103: display unit
- 104: first remote-control signal receiving unit
- 105: transmitting unit
- 200: disc
- 201: disc drive unit
- 202: second AV processing unit
- 203: second input/output unit
- 204: second remote-control signal receiving unit
- 205: CPU
- 206: flash memory
- 207: memory
- 501: stream control unit
- 502: depth decision unit
- 503: video decoder
- 504: graphics decoder
- 505: synthesizing unit
- 506: subtitle decoder
- 507: depth determining decoder
- 700: graphics image signal acquiring unit
- 701: synchronizing unit
- 702: depth applying unit
- 703: graphics synthesizing unit

## Claims

1. A video reproducing device capable of synthesizing a first image being a stereo image and a second image and outputting a synthesized image, comprising:
an acquiring unit operable to acquire a first image and a second image to be synthesized in one frame; and
a synthesizing unit operable to generate the synthesized image by synchronously synthesizing the first image and the second image acquired by the acquiring unit, and output the synthesized image,
wherein, if the acquiring unit fails to acquire the second image to be synthesized in the one frame when the synthesizing unit generates the synthesized image, the synthesizing unit synthesizes a second image which is to be synthesized with a first image of other frame than the one frame with the first image to be synthesized in the one frame.

2. The video reproducing device according to claim 1,
wherein depth of the second image in a stereo image display is determined in accordance with depth information, and
wherein, if the acquiring unit fails to acquire the second image to be synthesized in the one frame when the synthesizing unit synthesizes the first image and the second image to be synthesized in the one frame, the synthesizing unit synthesizes the second image which is to be synthesized with the first image of the other frame with the first image to be synthesized in the one frame with the use of the depth information about the second image to be synthesized in the one frame.

3. The video reproducing device according to claim 1,
wherein depth of the second image in a stereo image display is determined in accordance with depth information, and
wherein, if the acquiring unit fails to acquire the second image to be synthesized in the one frame when the synthesizing unit synthesizes the first image and the second image to be synthesized in the one frame, the synthesizing unit obtains depth information about the second image to be synthesized in the one frame based on content of the second image which is to be synthesized with the first image of the other frame, and synthesizes the second image which is to be synthesized with the first image of the other frame with the first image to be synthesized in the one frame with the use of the obtained depth information.

4. The video reproducing device according to claim 1,
wherein the second image includes at least one of a graphics image and a subtitle image.

5. A semiconductor device capable of synthesizing a first image being a stereo image and a second image and outputting a synthesized image, comprising:
an acquiring unit operable to acquire a first image and a second image to be synthesized in one frame;
a synthesizing unit operable to generate the synthesized image by synchronously synthesizing the first image and the second image acquired by the acquiring unit, and output the synthesized image; and
a signal output unit operable to output the synthesized image,
wherein, if the acquiring unit fails to acquire the second image to be synthesized in the one frame when the synthesizing unit generates the synthesized image, the synthesizing unit synthesizes a second image which is to be synthesized with a first image of other frame than the one frame with the first image to be synthesized in the one frame.

6. A video reproducing method for synthesizing a first image being a stereo image and a second image and outputting a synthesized image, comprising:
acquiring a first image and a second image to be synthesized in one frame by a acquiring unit; and
generating the synthesized image by synchronously synthesizing the first image and the second image acquired by the acquiring, and outputting the synthesized image by a synthesizing unit,
wherein, if the acquiring unit fails to acquire the second image to be synthesized in the one frame when the generating the synthesized image, the synthesizing unit synthesizes a second image which is to be synthesized with a first image of other frame than the one frame with the first image to be synthesized in the one frame.
